# EUROPÄISCHE PATENTSCHRIFT

(11) **EP 4 504 562 B1**
(45) Veröffentlichungstag und Bekanntmachung des Hinweises auf die Patenterteilung: **18.02.2026**
(21) Anmeldenummer: 23717455.2
(22) Anmeldetag: 03.04.2023
(51) Int. Cl.: B60R 9/06, B60R 9/10, B60R 5/04

(54) **KRAFTFAHRZEUG MIT LASTENTRÄGER**
MOTOR VEHICLE WITH LOAD CARRIER
VÉHICULE À MOTEUR AVEC SUPPORT DE CHARGE

(30) Priorität: 01.04.2022 EP 22166344
(43) Veröffentlichungstag der Anmeldung: 12.02.2025
(73) Patentinhaber: Kabkin GmbH & Co. KG, 58256 Ennepetal (DE)
(72) Erfinder: WINDHÖVEL, Chris, 58256 Ennepetal (DE); OLDIGES, Marc, 58256 Ennepetal (DE)
(74) Vertreter: Hoffmann Eitle
(86) Internationale Anmeldenummer: PCT/EP2023/058650
(87) Internationale Veröffentlichungsnummer: WO 2023/187219

(56) Entgegenhaltungen:
- EP-A1- 1 083 093
- EP-A1- 1 426 235
- EP-A1- 2 033 845
- EP-A1- 2 532 554
- EP-A2- 1 972 501
- DE-A1- 10 038 604
- DE-A1- 102006 059 982
- DE-A1- 102017 122 986
- DE-B3- 102005 054 059
- US-A- 3 085 826

## Beschreibung

Die Erfindung betrifft ein Kraftfahrzeug mit einem Lastenträger sowie eine Verwendung einer Plattform mit einer kinematische Baugruppe.

Die Erfindung schafft eine Erhöhung der Funktionalität und/oder Flexibilität eines Kraftfahrzeugs, welches insbesondere als ein Kleinwagen, insbesondere mit Elektroantrieb, ausgestaltet ist. Im Falle eines sich ergebenden notwendigen Transports einer nicht im Kofferraum zu transportierenden Last, kann vorgesehen sein, eine zumindest teilweise in den Außenraum des Kraftfahrzeugs ragende Plattform zu nutzen. Ein einfacher Transport, bei dem bei Bedarf eine sonst insbesondere in den Bereich des Innenraums ragende Plattform verwendet werden kann, ist möglich. Es können sperrige und/oder schwere Gegenstände transportiert werden, wobei der Transport insbesondere im Stadtbereich erfolgen kann.

Es kann die Möglichkeit des Transports außerhalb bzw. zumindest teilweise außerhalb des Kraftfahrzeugs geschaffen werden. Eine Last kann auf einer Plattform angeordnet werden.

Die Erfindung schafft ein Kraftfahrzeug mit einem Lastenträger gemäß Anspruch 1.

Im Sinne der Beschreibung betrifft der Begriff "Plattform" jede Ausgestaltung, auf die und/oder an der eine Last angeordnet werden kann. Es kann vorgesehen sein, dass die Plattform eine zumindest teilweise an die äußere Form der Last angepasste Ausgestaltung aufweist. Mittels der Plattform kann die Last punktuell (gegebenenfalls an mehreren Punkten) und/oder flächig (an einer oder mehreren flächig ausgestalteten Auflagemöglichkeiten) unterstützt werden. Der Begriff Plattform schließt nicht aus, dass die Last an die Plattform zumindest teilweise angehängt werden kann. Die Plattform kann die Möglichkeit bieten, die Last zu fixieren.

Im Sinne der Beschreibung umfasst der Begriff "Kinematikbaugruppe" eine Baugruppe, die auf einer Seite mit einem oder mehreren (Anbindungs-)Punkten mit dem Kraftfahrzeug mittelbar oder unmittelbar verbunden sein kann. Auf der anderen Seite kann die Kinematikbaugruppe mittelbar oder unmittelbar mit der Plattform verbunden sein. Mittels der Kinematikbaugruppe ist ein Verschwenken der Plattform möglich, wobei insbesondere zwei Positionen bzw. Endlagen vorgegeben sein können. Die Kinematikbaugruppe kann insbesondere die Plattform derart verschwenken, dass sich die Lage der Plattform in den beiden Positionen durch eine translatorische Verschiebung ergibt, wodurch sich die Neigung der Plattform relativ gegenüber dem Kraftfahrzeug bzw. der Aufstellfläche oder des Bodens des Kraftfahrzeugs nicht verändern muss. Die Plattform kann in den beiden Positionen eine geringe Neigung gegenüber der Aufstellfläche bzw. des Bodens des Kraftfahrzeugs haben; im Wesentlichen kann sich die Plattform quer zur Richtung der Erdbeschleunigung in den beiden Positionen erstrecken.

Der Begriff "Last" umfasst im Sinne der Beschreibung jede zu transportierende Last. Bei der Last kann es sich insbesondere um ein oder mehrere, insbesondere zwei, Fortbewegungs- oder Transportmittel auf dem Land oder auf dem Wasser handeln. Es kann vorgesehen sein, dass mehrere Lasten transportiert werden können. Es kann vorgesehen sein, dass die Last ein oder mehrere Rollstühle sein können. Bei der Last kann es sich um ein oder mehrere ein- oder mehrrädrige Fahrzeuge handeln. Bei der Last kann es sich insbesondere um ein oder mehrere Zweiräder, Dreiräder oder vierrädrige Landfahrzeuge handeln. Es ist auch möglich, dass die Last ein Sportgerät, beispielsweise ein Surfbrett, ein Kanu, Kajak oder Kanadier umfassen kann. Bei der Last kann es sich um jedes zählbare und/oder nichtzählbare Gut handeln. Der Begriff Last umfasst auch jedwedes Möbel, Werkzeug, Elektrogerät, Musikinstrument und/oder Behälter, die insbesondere für den Transport von Gütern verwendet werden. Insbesondere kann ein Behälter eines oder mehrere der vorgenannten Güter beinhalten. Es ist möglich, dass es sich bei der Last um einen Picknickkorb handelt. Die auf die Last bezogene Einzahl beim bestimmten oder unbestimmten Artikel umfasst auch die Möglichkeit, dass die Last mehrere zählbare oder unzählbare Elemente aufweisen kann. Es kann vorgesehen sein, dass die Last Elemente unterschiedlicher Art oder gleicher Art aufweisen kann.

Der Begriff "Kraftfahrzeug" umfasst im Sinne der Beschreibung allgemein ein durch einen Motor angetriebenes, nicht an Schienen gebundenes Fahrzeug, das auf dem Erdboden bewegt wird. Bei einem Kraftfahrzeug im Sinne der Beschreibung kann es sich um einen Personenkraftwagen, insbesondere um einen Kleinwagen, handeln. Es ist auch möglich, dass es sich bei dem Kraftfahrzeug um ein Golfplatzfahrzeug handelt.

Der Lastenträger kann insbesondere bei einem Golfplatzfahrzeug im Bereich der hinteren bzw. heckseitigen Sitzfläche angeordnet sein. Die Plattform kann in der ersten Position unter der Sitzfläche positioniert sein, wobei die Sitzfläche verschwenkt, geklappt, verschoben und/oder entfernt werden kann, um zu ermöglichen, die Plattform von der ersten Position in die zweite Position zu bewegen. Es ist auch möglich, dass die Plattform bzw. der Lastenträger an einer hinteren Anordnung des Golfplatzfahrzeugs seitlich angeordnet ist. Eine Abdeckung für den Lastenträger, um diesen zu verdecken, wenn ein Gebrauch nicht vorliegt, ist möglich.

Im Sinne der Beschreibung kann eine Plattform Elemente aufweisen, die zur Unterstützung der Last und/oder einer Trennung unterschiedlicher Lasten bzw. Elemente der Last vorgesehen sein können. Es kann beispielsweise vorgesehen sein, dass die Plattform für ein Tragen von mindestens 2 Zweirädern ausgestaltet sein kann, wobei die Plattform für jedes Zweirad mindestens ein Halterungselement aufweisen kann, wobei mindestens eines der beiden Halterungselemente oder beide relativ zur Oberfläche der Plattform verschwenkt und/oder an der Plattform fixiert werden können. Dies kann vorteilhaft sein, wenn die Last(en) nicht transportiert werden soll(en) und die Plattform in einer Ruheposition, insbesondere einer ersten Position in einem Stauraum, angeordnet sein kann.

Der Begriff "erste Position" der Plattform umfasst eine Position der Plattform, in der die Plattform innerhalb, insbesondere vollständig, des Kraftfahrzeugs angeordnet ist. Hierunter kann eine Position verstanden werden, in der die Plattform innerhalb der Außenhülle des Kraftfahrzeugs angeordnet ist.

Der Begriff "zweite Position" der Plattform umfasst eine von der ersten Position unterschiedliche Position der Plattform, bei der die Plattform nicht notwendigerweise, insbesondere vollständig, außerhalb des Kraftfahrzeugs angeordnet ist.

Es ist insbesondere möglich, dass die Kinematikbaugruppe, die Plattform und/oder eine Heckklappe oder Hecktür des Kraftfahrzeugs derart ausgestaltet ist/sind, dass die Heckklappe oder Hecktür des Kraftfahrzeugs geschlossen werden kann, wenn sich die Plattform in der zweiten Position befindet.

Es kann vorgesehen sein, dass ein Antrieb, insbesondere in Form eines Motors, vorhanden ist, der die Plattform von der ersten Position in die zweite Position bewegt. Der Motor kann jedweder Motor sein. Eine Verwendung der Ressourcen, die das Kraftfahrzeug bereitstellt, ist möglich; insbesondere kann das Bordnetz eines Elektro-Kraftfahrzeugs für die Bereitstellung der Energie für den Antrieb bzw. Motor verwendet werden. Es ist ein pneumatischer Motor/Antrieb, ein hydraulischer Motor/Antrieb und/oder ein elektrischer Motor/Antrieb möglich.

Die Steuerung einer Bewegung der Plattform in die einzelnen Positionen kann über einen oder mehrere im bzw. am Kraftfahrzeug angeordneten Betätigungselementen erfolgen. Das bzw. die Betätigungselemente können als manuelle, akustisch und/oder kapazitiv betätigbare Betätigungselemente ausgestaltet sein. Das Betätigungselement kann auch über ein im Kraftfahrzeug vorhandenes Touchpad realisiert sein.

Die Steuerung einer Bewegung der Plattform in die einzelnen Positionen, insbesondere der Bewegung von der ersten Position in die zweite Position und umgekehrt, kann alternativ oder zusätzlich mit der Betätigung der Schließanlage des Kraftfahrzeugs funktional gekoppelt sein. An dem Betätiger für die Schließanlage des Kraftfahrzeugs kann ein Betätigungselement für den Lastenträger vorhanden sein. Hierdurch kann insbesondere bei einem abgestellten, verriegelten Fahrzeug, mit dem eine Last transportiert werden soll, eine Bereitstellung der Plattform erreicht werden.

Die Bewegung der Plattform in die einzelnen Positionen, insbesondere der Bewegung von der ersten Position in die zweite Position und umgekehrt, kann alternativ oder zusätzlich mittels einer App, bspw. eines Smartphones, gesteuert werden, wodurch insbesondere eine Nachrüstung eines Kraftfahrzeugs mit einem Lastenträger und eine Steuerung desselben einfach möglich ist. Ferner kann eine Steuerung mittels einer App einen erhöhten Komfort und/oder eine erhöhte Funktionalität bieten.

Die Begriffe "erste Position" und "zweite Position" schließen nicht aus, dass die Plattform weitere Positionen annehmen kann. Insbesondere kann die Plattform Positionen annehmen, die zwischen der ersten und der zweiten Position und umgekehrt angenommen werden können. Insbesondere kann die Plattform zwischen der ersten Position und der zweiten Position verschwenkt werden. Bei der "ersten Position" und/oder der "zweiten Position" kann es sich um Endpositionen der Verschwenkbewegung handeln. Es kann aber auch vorgesehen sein, dass die Plattform gegenüber einer "Zwischenposition", die die "zweite Position" sein kann, in der die Plattform stabil verbleiben und/oder mechanisch fixiert werden kann, in eine "dritte Position" bewegt werden kann, in der die Plattform ebenfalls stabil verbleiben und/oder mechanisch fixiert werden kann. Bevorzugt kann die "dritte Position" außerhalb der Positionen zwischen der "ersten Position" und der "zweiten Position" vorliegen.

Die Plattform kann mit einer Tragstruktur verbunden sein, die ihrerseits mit der Kinematikbaugruppe verbunden ist. Die Tragstruktur kann dazu verwendet werden, der Plattform die durch die Kinematikbaugruppe festgelegte Bewegung aufzuprägen, d.h. die Plattform zusammen mit der Tragstruktur zu bewegen. Gegenüber der Tragstruktur kann die Plattform relativ bewegt werden. Beispielsweise kann die am Ende der durch die Kinematikbaugruppe vorgegebenen Bewegung der Tragstruktur, in der sich die Plattform beispielsweise in der zweiten Position befindet, die Plattform gegenüber der Tragstruktur in die dritte Position bewegt werden. Bei der Bewegung der Plattform gegenüber der Tragstruktur kann es sich insbesondere um eine translatorische Bewegung handeln. Die Plattform kann beispielsweise aus der Tragstruktur ausgeschoben werden. Die Bewegung der Plattform bei gegebenenfalls vorhandener Tragstruktur kann zwischen der ersten Position und der zweiten Position durch die Kinematikbaugruppe vorgegeben sein, wohingegen bei der Bewegung der Plattform zwischen der zweiten Position und der dritten Position die Kinematikbaugruppe in Ruhe verbleibt und die Plattform gegenüber der Tragstruktur bewegt werden kann.

Die Tragstruktur kann eine teilweise Umhüllung oder endseitig offene Kasten- oder Schubladenkonstruktion sein, die die Plattform zumindest teilweise aufnehmen kann. Es kann vorgesehen sein, dass die Tragstruktur eine Anbindung an die Kinematikbaugruppe für die Plattform bildet, die die Bewegungsmöglichkeit der Plattform vergrößert und/oder die Bewegungsmöglichkeit der Plattform von der Bewegungsmöglichkeit mittels der Kinematkbaugruppe entkoppelt. Die Kinematikbaugruppe kann ein Verschwenken ermöglichen, wobei die an der Tragstruktur angeordnete Plattform mit der Tragstruktur, insbesondere als eine initiale Bewegung, verschwenkt werden kann. Gegenüber der Tragstruktur kann die Plattform, insbesondere nach dem Verschwenken, translatorisch bewegt werden.

Die Plattform kann mittels eines oder mehrerer an der Plattform, der Tragstruktur und/oder der Kinematikbaugruppe angeordneter Elemente in ihrer effektiven Fläche vergrößert werden, indem das bzw. die Elemente insbesondere gegenüber der Plattform, der Tragstruktur und/oder der Kinematikbaugruppe bewegt werden können. Insbesondere kann die Bewegung dann vorteilhaft ausgeführt werden, wenn sich die Plattform in einer von der ersten Position verschiedenen Position, insbesondere der zweiten Position und/oder der dritten Position, befindet. Das oder die Elemente können an der Plattform, der Tragstruktur und/oder der Kinematikbaugruppe verschwenkbar, translatorisch verfahrbar oder mittels einer Mischform einer Verschwenk- und einer Translationsbewegung bewegbar, befestigt sein. Die Elemente können in Zwischen- und/oder Endlagen an der Plattform, der Tragstruktur und/oder der Kinematikbaugruppe verrasten oder fixiert werden.

Der Begriff "effektive Fläche" umfasst im Sinne der Beschreibung im Kontext des oder der Elemente, die gegenüber der Plattform, der Tragstruktur und/oder der Kinematikbaugruppe bewegt werden können, die Fläche, die zur Unterstützung der Last vorgesehen sein kann. Insbesondere kann durch das oder die Elemente eine im Wesentlichen horizontal ausgerichtete Fläche zusätzlich zur Fläche der Plattform vorgesehen sein, die dazu dienen kann, die Last aufzulegen. Bei der Fläche muss es sich aber nicht notwendigerweise um eine im Wesentlichen horizontal ausgerichtete Fläche handeln. Es kann auch eine oder mehrere Flächen zusätzlich zur Fläche der Plattform geben, die im Wesentlichen vertikal oder in einem Winkel ungleich 0° zur Horizontalen angeordnet werden können, um die Last zumindest teilweise "seitlich" zu unterstützen. Die zur Unterstützung der Last vorgesehene Fläche kann sich durch das bzw. die Elemente vergrößern. Eine Auskragung der "Gesamtplattform" kann, insbesondere bei Bedarf, vergrößert und/oder der Aufwand für die Kinematikbaugruppe verkleinert werden, wodurch sich u.a. eine größere Flexibiltät bei der Nutzung, aber auch bei der Konstruktion ergeben kann.

Im Sinne der Beschreibung werden die Begriffe "heckseitiger Stauraum" und "Kofferraum" synonym verwendet als ein im heckseitigen Bereich des Kraftfahrzeugs vorgesehener Raum, der durch eine heckseitige Öffnung von außen zugänglich ist.

In einer bevorzugten Ausführungsform kann die Plattform über die Heckkante des Kraftfahrzeugs, insbesondere bogenförmig, verschwenkbar sein. Der Begriff "Hecckante" umfasst im Sinne der Beschreibung die bodenseitige Kante des Kofferraums bzw. des im hinteren Bereich des Kraftfahrzeugs angeordneten Raums. Insoweit kann die Heckkante die bodenseitige Kante der Begrenzung der heckseitigen Öffnung sein.

Erfindungsgemäß sind die Kinematikbaugruppe und die Anlenkung der Kinematikbaugruppe an die Plattform und/oder das Kraftfahrzeug derart ausgestaltet, dass sich die Lage der Plattform in der ersten Position und die Lage der Plattform in der zweiten Position durch eine Verschiebung im Raum ergibt, so dass die Konstruktion und Planung vereinfacht werden kann. Es ist nicht ausgeschlossen, dass die Verschiebung im Raum auch eine Drehung um eine Achse beinhaltet, die mittig bezogen auf die Fahrtrichtung des Kraftfahrzeugs in der Plattform liegt.

In einer bevorzugten Ausführungsform erstreckt sich die Fläche der Plattform im Wesentlichen derart, dass die Flächennormale der Plattform mit der Flächennormale einer Aufstandsfläche des Kraftfahrzeugs einen Winkel kleiner als 30°, insbesondere kleiner als 25°, insbesondere kleiner als 20°, insbesondere kleiner als 15°, insbesondere kleiner als 10°, insbesondere kleiner als 5°, einschließt. Hierdurch kann die Plattform in der ersten Position und/oder der zweiten Position genutzt werden, indem die Plattform beispielweise Aufstandsfläche für Dinge sein kann.

In einer bevorzugten Ausfüphrungsform sind zwischen der Plattform und der Kinematikbaugruppe mindestens zwei Befestigungspunke vorhanden, die die Lage der Plattform stabilisieren.

Es kann vorgesehen sein, dass eine stabilisierende Verstärkung mit dem Rahmen des Kraftfahrzeugs vorhanden ist, um die an dem oder den (Anlenkungs-)Punkten der Kinematikbaugruppe mit dem Kraftfahrzeug eingeleiteten Kräfte aufzufangen bzw. umzuleiten.

In einer bevorzugten Ausführungsform ist eine Führung zumindest für einen Bewegungsabschnitt beim Verschwenken für die Tragstruktur und/oder Plattform vorgesehen, die die Plattform und/oder Tragstruktur in der zweiten Position stabilisiert. Der Begriff "Führung" umfasst im Sinne der Beschreibung ein oder mehrere Elemente, die die Plattform und/oder Tragstruktur während der Bewegung abstützen.

In einer bevorzugten Ausführungsform ist an einem Verschluss einer Hecköffnung des Kraftfahrzeugs zumindest ein Durchgang für mindestens einen Arm der Kinematikbaugruppe vorgesehen, durch den sich der Arm erstrecken kann, wenn die Plattform in der zweiten und/oder dritten Position ist. Im Sinne der Beschreibung wird unter einem Arm der Kinematikbaugruppe ein Element verstanden, welches zumindest abschnittsweise balken-, stab- und/oder stangenförmig ist.

In einer bevorzugten Ausführungsform ist der mindestens eine Durchgang mittels eines Abtrennens mindestens eines Abschnitts am Verschluss der Hecköffnung ausbildbar, so dass solange die Plattform in der ersten Position ist und die Plattform nicht benötigt wird, eine dichte Umhüllung des Innenraums des Kraftfahrzeugs möglich ist, die wahlweise zum Durchragen des Arms der Kinematikbaugruppe geöffnet und nach der Verwendung wieder geschlossen werden kann.

In einer bevorzugten Ausführungsform ist mindestens ein Einsatz für den mindestens einen Durchgang vorhanden, der in den Durchgang eingesetzt den Durchgang verschließt, wobei beim Hindurchragen des Arms der Kinmeatikbaugruppe ein an den Arm angepasster Einsatz verwendet werden kann.

In einer bevorzugten Ausführungsform ist der Verschluss der Hecköffnung teilbar, so dass für den Einsatz ein Teil des Verschlusses verwendet werden kann.

Die Erfindung schafft auch eine Verwendung einer Plattform mit einer Kinematikbaugruppe für den Bereich des Hecks eines Kraftfahrzeugs.

Die Erfindung schafft ferner ein Verfahren zum Bewegen eines Lastenträgers an einem Kraftfahrzeug, wobei der Lastenträger, eine Plattform, insbesondere zum Tragen eines Zweirads oder dergleichen, und mindestens eine mit der Plattform und einem heckseitigen Bereich des Kraftfahrzeugs verbundene Kinematikbaugruppe aufweist, wobei die Plattform mittels der Kinematikbaugruppe von einer ersten Position innerhalb des Kraftfahrzeugs in eine zweite Position verschwenkbar ist, und eine Heckklappe oder Hecktür bei in der zweiten Position vorhandener Plattform geschlossen wird.

Die Erfindung wird in Bezug auf ein Kraftfahrzeug sowie eine Verwendung und ein Verfahren beschrieben, wobei die Aspekte in Form des Kraftfahrzeugs und der Verwendung sowie des Verfahrens einander ergänzen, sodass Ausführungen zu einem der Aspekte, insbesondere dem Kraftfahrzeug, auch den Aspekt der Verwendung oder des Verfahrens beschreiben.

Die vorstehenden Ausführungen stellen ebenso wie die nachfolgende Beschreibung beispielhafter Ausführungsformen keinen Verzicht auf bestimmte Ausführungsformen oder Merkmale da.

Die Erfindung wird nachfolgend anhand zweier in den Figuren dargestellten Ausführungsbeispielen näher erläutert.

In den Figuren zeigt
- Figur 1: eine schematische Darstellung eines heckseitigen Bereichs eines Kraftfahrzeugs in einer teilweisen Schnittdarstellung gemäß einer ersten Ausführungsform;
- Figur 2: die Darstellung der Figur 1 mit geöffneter Heckklappe;
- Figur 3: die Darstellung der Figur 2 mit zusätzlich verschwenkter Plattform;
- Figur 4: einen Ausschnitt der Darstellung der Figur 3 mit zusätzlich translatorisch ausgefahrener Plattform;
- Figur 5: eine schematische Darstellung eines heckseitigen Bereichs eines Kraftfahrzeugs in einer teilweisen Schnittdarstellung gemäß einer ersten Ausführungsform;
- Figur 6: die Darstellung der Figur 5 mit geöffneter Heckklappe;
- Figur 7: die Darstellung der Figur 6 mit zusätzlich verschwenkter Plattform; und
- Figur 8: die Darstellung der Figur 7 mit abgehobenem und eingesetzten Kofferraumboden.

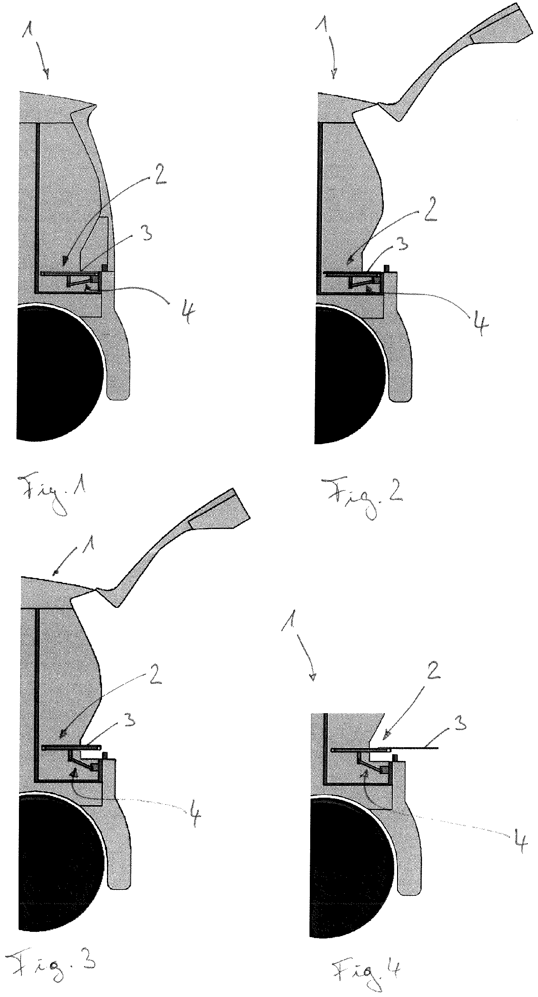

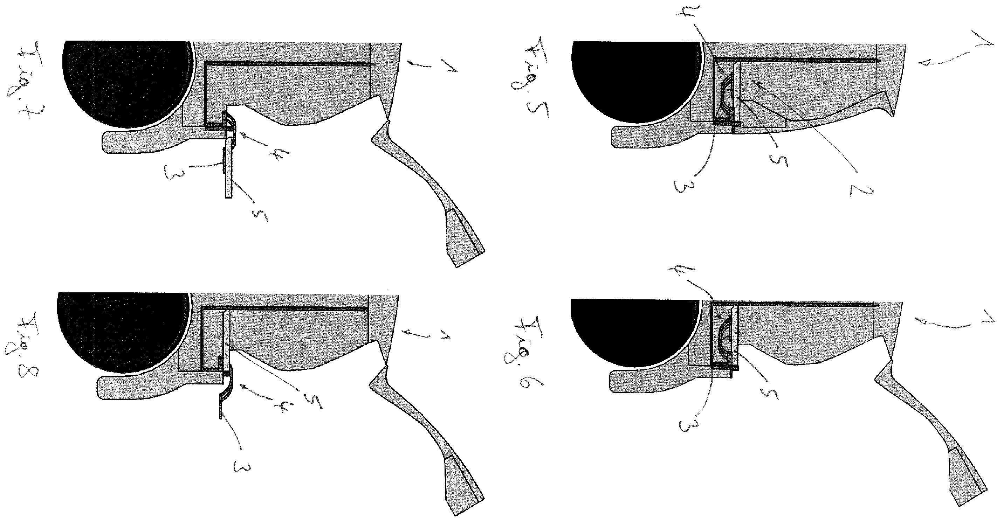

Figur 1 zeigt in einer schematischen, teilweise geschnittenen Darstellung einen heckseitigen Bereich eines Kraftfahrzeugs 1. Das Kraftfahrzeug 1 weist einen Lastenträger 2 auf. Der Lastenträger 2 weist eine Plattform 3 auf, die bei Bedarf, d. h. bei einem Transport eines sperrigen und/oder schweren Guts, welches insbesondere nicht im Kofferraum verstaut werden kann, aus einer ersten Position (vgl. Figur 1 und 5) in eine zweite Position (vgl. Fig. 3 und 7) verschwenkbar ist.

Die Plattform 3 ist zum Tragen eines oder mehrerer Zweiräder oder dergleichen ausgestaltet.

Die Plattform 3 des Lastenträgers 2 ist mittels einer Kinematikbaugruppe 4 mit dem Kraftfahrzeug 1 im Bereich des Hecks verbunden. Mittels der Kinematikbaugruppe 4 ist die Plattform 3 von der ersten Position (Figur 1 bzw. Figur 5) innerhalb des Kraftfahrzeugs 1 in die zweite Position (Figur 3 und 7) in beiden Ausführungsformen verschwenkbar.

In dem in den Figuren 1 bis 4 dargestellten Ausführungsbeispiel ist die Plattform 3 neben einem Verschwenken der Plattform 3 von der in Figur 1 dargestellten ersten Position in die in Figur 3 dargestellte zweite Position auch translatorisch relativ gegenüber dem Kraftfahrzeug 1 in den Außenbereich ausfahrbar. Dazu ist eine Tragstruktur 6 des Lastenträgers 2 vorgesehen, gegenüber der die Plattform 3 entgegen der Fahrtrichtung ausgefahren werden kann. Im ersten Ausführungsbeispiel kann die Plattform 3 so zumindest teilweise außerhalb des Kraftfahrzeugs 1 angeordnet werden, um auf oder an der Plattform 3 eine oder mehrere Lasten bzw. Elemente der Last anzuordnen. Auf die in Figur 4 dargestellte Plattform 3 kann die Last aufgelegt werden. Eine Last, die an der in Figur 4 dargestellten Plattform 3 angeordnet werden kann, kann über der Plattform 3 überstehen und auch zumindest teilweise unterhalb der Plattform 3 angeordnet sein.

In dem in den Figuren 5 bis 8 dargestellten Ausführungsbeispiel wird die Plattform 3 von einer ersten Position innerhalb des Kraftfahrzeugs 1, bei der die Plattform 3 vollständig im Bereich des Kofferraumbodens angeordnet ist, in eine zweite Position, die vollständig außerhalb des Kraftfahrzeugs 1 angeordnet ist, verschwenkt. Ein Abschnitt der Kinematikbaugruppe 4 ragt aus dem Kraftfahrzeug 1 heraus, an dem endseitig die Plattform 3 angeordnet ist. Im zweiten Ausführungsbeispiel kann die Plattform 3 so zumindest teilweise aber auch vollständig außerhalb des Kraftfahrzeugs 1 angeordnet werden, um auf oder an der Plattform 3 eine oder mehrere Lasten bzw. Elemente der Last anzuordnen. An der in Figur 8 dargestellten Plattform 3 kann die Last angeordnet werden und über der Plattform 3 überstehen, insbesondere zu den beiden Seiten im Wesentlichen quer zur Fahrrichtung und nach hinten.

In dem in den Figuren 5 bis 8 dargestellten Ausführungsbeispiel ist die Plattform 3 unterhalb einer Abdeckung 5 für den Kofferraumboden angeordnet. Beim Verschwenken der Plattform 3 wird die über der Plattform 3 angeordnete Abdeckung 5 zunächst mitbewegt. Die Abdeckung 5 kann - wenn die Plattform aus dem Kofferraumboden verschwenkt wurde - wieder eingesetzt werden (Figur 8) und so ermöglichen, dass der Kofferraum ohne zu transportierende Last und mit zu transportierender Last eine im Wesentlichen ebene Auflagefläche bietet.

## Patentansprüche

1. Kraftfahrzeug (1) mit einem Lastenträger (2), der eine Plattform (3), insbesondere zum Tragen eines Zweirads oder dergleichen, und mindestens eine mit der Plattform (3) und einem heckseitigen Bereich des Kraftfahrzeugs (1) verbundene Kinematikbaugruppe (4) aufweist, mittels derer die Plattform (3) von einer ersten Position innerhalb des Kraftfahrzeugs (1) in eine zweite Position verschwenkbar ist, **dadurch gekennzeichnet, dass** die Kinematikbaugruppe (4) und die Anlenkung der Kinematikbaugruppe (4) an die Plattform (3) und/oder das Kraftfahrzeug (1) derart ausgestaltet sind, dass sich die Lage der Plattform (3) in der ersten Position und die Lage der Plattform (3) in der zweiten Position durch eine Verschiebung im Raum ergibt.

2. Kraftfahrzeug (1) nach Anspruch 1, wobei die Plattform (3) in der ersten Position innerhalb des Kraftfahrzeugs (1) im Bereich des Bodens eines heckseitigen Stauraums des Kraftfahrzeugs (1) angeordnet ist.

3. Kraftfahrzeug (1) nach Anspruch 1 oder 2, wobei die Plattform (3) in der zweiten Position außerhalb des Kraftfahrzeugs (1) angeordnet ist.

4. Kraftfahrzeug (1) nach einem der Ansprüche 1 bis 3, wobei die Plattform (3) über die Heckkante des Kraftfahrzeugs (1), insbesondere bogenförmig, verschwenkbar ist.

5. Kraftfahrzeug (1) nach einem der Ansprüche 1 bis 4, wobei sich die Fläche der Plattform (3) im Wesentlichen derart erstreckt, dass die Flächennormale der Plattform (3) mit der Flächennormale einer Aufstandsfläche des Kraftfahrzeugs (1) einen Winkel kleiner als 30°, insbesondere kleiner als 25°, insbesondere kleiner als 20°, insbesondere kleiner als 15°, insbesondere kleiner als 10°, insbesondere kleiner als 5°, einschließt.

6. Kraftfahrzeug (1) nach einem der Ansprüche 1 bis 5, wobei zwischen der Plattform (3) und der Kinematikbaugruppe (4) mindestens zwei Befestigungspunke vorhanden sind, die die Lage der Plattform (3) stabilisieren.

7. Kraftfahrzeug (1) nach einem der Ansprüche 1 bis 6, wobei eine Tragstruktur (6) vorgesehen ist, die mit der Kinematikbaugruppe (4) verbunden ist, und die Plattform (3) sowie die Tragstruktur (6) ausgestaltet sind, die Plattform (3) relativ zur Tragstruktur (6), insbesondere translatorisch, zu bewegen.

8. Kraftfahrzeug (1) nach Anspruch 7, wobei eine Führung zumindest für einen Bewegungsabschnitt beim Verschwenken für die Tragstruktur (6) und/oder Plattform (3) vorgesehen ist, die die Plattform (3) und/oder Tragstruktur (6) in der zweiten Position stabilisiert.

9. Kraftfahrzeug (1) nach einem der Ansprüche 1 bis 8, wobei an der Plattform (3) und/oder der Kinematikbaugruppe (4) Elemente vorhanden sind, die gegenüber der Plattform (3) relativ bewegbar sind, um die effektive Fläche der Plattform (3), insbesondere in der zweiten Position, zu vergrößern.

10. Kraftfahrzeug (1) nach einem der Ansprüche 1 bis 9, wobei an einem Verschluss einer Hecköffnung des Kraftfahrzeugs (1) zumindest ein Durchgang für mindestens einen Arm der Kinematikbaugruppe (4) vorgesehen ist, durch den sich der Arm erstrecken kann, wenn die Plattform (3) in der zweiten Position ist.

11. Kraftfahrzeug (1) nach Anspruch 10, wobei der mindestens eine Durchgang mittels eines Abtrennens mindestens eines Abschnitts am Verschluss der Hecköffnung ausbildbar ist.

12. Kraftfahrzeug (1) nach Anspruch 10 oder 11, wobei mindestens ein Einsatz für den mindestens einen Durchgang vorhanden ist, der in den Durchgang eingesetzt den Durchgang verschließt.

13. Kraftfahrzeug (1) nach einem der Ansprüche 10 bis 12, wobei der Verschluss der Hecköffnung teilbar ist.

## Claims

1. Motor vehicle (1) with a load carrier (2) having a platform (3), in particular for carrying a two-wheeled vehicle or the like, and at least one kinematic assembly (4) connected to said platform (3) and a rear region of the motor vehicle (1), by means of which the platform (3) can be pivoted from a first position within the motor vehicle (1) into a second position, **characterised in that** the kinematic assembly (4) and the linkage of the kinematic assembly (4) to the platform (3) and/or the motor vehicle (1) are configured such that the positioning of the platform (3) in the first position and the positioning of the platform (3) in the second position are obtained by a displacement in space.

2. Motor vehicle (1) according to claim 1, wherein the platform (3) is arranged in the first position within the motor vehicle (1) in the region of the floor of a rear storage space of the motor vehicle (1).

3. Motor vehicle (1) according to claim 1 or 2, wherein the platform (3) is arranged in the second position outside the motor vehicle (1).

4. Motor vehicle (1) according to any of claims 1 to 3, wherein the platform (3) can be pivoted over the rear edge of the motor vehicle (1), in particular in an arcuate manner.

5. Motor vehicle (1) according to any of claims 1 to 4, wherein the surface of the platform (3) extends substantially such that the surface normal of the platform (3) encloses an angle of less than 30°, in particular less than 25°, in particular less than 20°, in particular less than 15°, in particular less than 10°, in particular less than 5°, with the surface normal of a contact surface of the motor vehicle (1).

6. Motor vehicle (1) according to any of claims 1 to 5, wherein at least two fastening points are present between the platform (3) and the kinematic assembly (4), which stabilise the positioning of the platform (3).

7. Motor vehicle (1) according to any of claims 1 to 6, wherein a support structure (6) is provided, which is connected to the kinematic assembly (4), and the platform (3) and the support structure (6) are configured to move the platform (3) relative to the support structure (6), in particular translationally.

8. Motor vehicle (1) according to claim 7, wherein a guide is provided for the support structure (6) and/or platform (3) at least for one section of movement during pivoting, which stabilises the platform (3) and/or support structure (6) in the second position.

9. Motor vehicle (1) according to any of claims 1 to 8, wherein elements are present on the platform (3) and/or the kinematic assembly (4) that are movable relative to the platform (3) in order to increase the effective area of the platform (3), in particular in the second position.

10. Motor vehicle (1) according to any of claims 1 to 9, wherein at least one passage for at least one arm of the kinematic assembly (4), through which the arm can extend when the platform (3) is in the second position, is provided at a closure of a rear opening of the motor vehicle (1).

11. Motor vehicle (1) according to claim 10, wherein the at least one passage is formable by separating at least one section at the closure of the rear opening.

12. Motor vehicle (1) according to claim 10 or 11, wherein at least one insert is present for the at least one passage, which insert, when inserted into the passage, closes the passage.

13. Motor vehicle (1) according to any of claims 10 to 12, wherein the closure of the rear opening is divisible.

## Revendications

1. Véhicule à moteur (1) avec un support de charge (2) qui comporte une plate-forme (3), destinée en particulier à porter un deux-roues ou similaire, et au moins un module cinématique (4) relié à la plate-forme (3) et à une zone arrière du véhicule à moteur (1), au moyen duquel la plate-forme (3) peut pivoter d'une première position à l'intérieur du véhicule à moteur (1) vers une seconde position, **caractérisé en ce que** le module cinématique (4) et l'articulation du module cinématique (4) sur la plate-forme (3) et/ou le véhicule à moteur (1) sont conçus de telle sorte que le positionnement de la plate-forme (3) dans la première position et le positionnement de la plate-forme (3) dans la seconde position résultent d'un déplacement dans l'espace.

2. Véhicule à moteur (1) selon la revendication 1, dans lequel la plate-forme (3) est disposée, dans la première position à l'intérieur du véhicule à moteur (1), dans la zone du plancher d'un espace de rangement arrière du véhicule à moteur (1).

3. Véhicule à moteur (1) selon l'une des revendications 1 ou 2, dans lequel la plate-forme (3) est disposée, dans la seconde position, à l'extérieur du véhicule à moteur (1).

4. Véhicule à moteur (1) selon l'une quelconque des revendications 1 à 3, dans lequel la plate-forme (3) peut pivoter au-delà du bord arrière du véhicule à moteur (1), en particulier en arc de cercle.

5. Véhicule à moteur (1) selon l'une quelconque des revendications 1 à 4, dans lequel la surface de la plate-forme (3) s'étend sensiblement de telle sorte que la normale à la surface de la plate-forme (3) forme avec la normale à la surface d'une surface de contact du véhicule à moteur (1) un angle inférieur à 30°, en particulier inférieur à 25°, en particulier inférieur à 20°, en particulier inférieur à 15°, en particulier inférieur à 10°, en particulier inférieur à 5°.

6. Véhicule à moteur (1) selon l'une quelconque des revendications 1 à 5, dans lequel au moins deux points de fixation sont présents entre la plate-forme (3) et le module cinématique (4), lesquels stabilisent la position de la plate-forme (3).

7. Véhicule à moteur (1) selon l'une quelconque des revendications 1 à 6, dans lequel est prévue une structure porteuse (6) qui est reliée au module cinématique (4), et la plate-forme (3) ainsi que la structure porteuse (6) sont conçues de manière à ce que la plate-forme (3) se déplace par rapport à la structure porteuse (6), en particulier par un mouvement de translation.

8. Véhicule à moteur (1) selon la revendication 7, dans lequel un guidage est prévu, pour au moins une partie du mouvement lors du pivotement, pour la structure porteuse (6) et/ou la plate-forme (3), ledit guidage stabilisant la plate-forme (3) et/ou la structure porteuse (6) dans la seconde position.

9. Véhicule à moteur (1) selon l'une quelconque des revendications 1 à 8, dans lequel des éléments sont présents sur la plate-forme (3) et/ou le module cinématique (4), lesquels sont mobiles relativement à la plate-forme (3) pour augmenter la surface effective de ladite plate-forme (3), en particulier dans la seconde position.

10. Véhicule à moteur (1) selon l'une quelconque des revendications 1 à 9, dans lequel est prévu, sur une fermeture d'une ouverture arrière du véhicule à moteur (1), au moins un passage pour au moins un bras du module cinématique (4), passage à travers lequel ledit bras peut s'étendre lorsque la plate-forme (3) est dans la seconde position.

11. Véhicule à moteur (1) selon la revendication 10, dans lequel au moins un passage peut être formé au moyen de la séparation d'au moins une section au niveau de la fermeture de l'ouverture arrière.

12. Véhicule à moteur (1) selon l'une des revendications 10 ou 11, dans lequel au moins un insert est présent pour au moins un passage, ledit insert servant à obturer le passage lorsqu'il est inséré dedans.

13. Véhicule à moteur (1) selon l'une quelconque des revendications 10 à 12, dans lequel la fermeture de l'ouverture arrière est divisible.
